# EUROPEAN PATENT APPLICATION

(11) **EP 4 366 110 A1**
(43) Date of publication of application: **08.05.2024**
(21) Application number: 22832138.6
(22) Date of filing: 29.06.2022
(51) Int. Cl.: H02J 3/32, H02J 7/00

(54) **ENERGY STORAGE POWER SUPPLY AND ENERGY STORAGE DEVICE**

(30) Priority: 29.06.2021 CN 202110724976
(71) Applicant: Zhejiang Litheli Technology Co., Ltd., Ningbo, Zhejiang 315016 (CN)
(72) Inventor: LI, Bin, Ningbo, Zhejiang 315016 (CN); XU, Naiqian, Ningbo, Zhejiang 315016 (CN); KE, Hengzhao, Ningbo, Zhejiang 315016 (CN)
(74) Representative: Murgitroyd & Company
(86) International application number: PCT/CN2022/102499
(87) International publication number: WO 2023/274326

(57) **Abstract**

Disclosed in the present application are an energy storage power supply and an energy storage device. The energy storage power supply includes a housing; the housing includes at least two accommodating portions; the at least two accommodating portions include at least one first accommodating portion and at least one second accommodating portion; the first accommodating portion is suitable to separably accommodate a first battery cell; the second accommodating portion is suitable to separably accommodate a second battery cell; the first battery cell and the second battery cell are different; a charging portion is disposed in each of the accommodating portions for supplying power to the first battery cell or the second battery cell; and the first battery cell and the second battery cell are suitable to supply power to same or different first electrical devices in a manner of being separated from the energy storage power supply. The energy storage power supply of the present application can charge different battery cells adapted to different first electrical devices; after the charging is completed, the battery cells can be removed from the energy storage power supply to be mounted on the corresponding first electrical devices, such that different first electrical devices can be respectively used at positions away from the energy storage power supply.

## Description

### TECHNICAL FIELD

The present application relates to the field of energy storage, and in particular to an energy storage device and an energy storage power supply.

### BACKGROUND

An energy storage power supply is a power supply device suitable for outdoor use. With the increase in the types of outdoor activities, the power supply of various electrical devices has become a problem that needs to be solved for outdoor activities. Therefore, portable energy storage power supplies have become the choice of more and more people. Energy storage power supplies generally store electricity through large-capacity batteries, which have a capacity of tens of thousands or even hundreds of thousands of milliamps and can output direct current and alternating current power to power various commonly used electronic products, lighting devices, etc.

In the usage scenario of the energy storage power supply, to ensure the continuous use of the electrical device, it is generally necessary to keep the electrical device electrically connected to the energy storage power supply, but this method results in limited use locations of the electrical device, and the electrical device can only be placed near the energy storage power supply, which brings a lot of inconvenience.

### SUMMARY

Based on the above technical problems, an object of the present application is to provide an energy storage power supply and an energy storage device, which helps to solve the problem of limited use range of electrical devices in the related art.

To achieve the above object, the present application provides an energy storage power supply, which includes a housing; the housing includes at least two accommodating potions, the at least two accommodating portions include at least one first accommodating portion and at least one second accommodating portion, the first accommodating portion is suitable to separably accommodate a first battery cell; the second accommodating portion is suitable to separably accommodate a second battery cell; the first battery cell and the second battery cell are different; a charging portion is disposed in each of the accommodating portions for supplying power to the first battery cell or the second battery cell; and the first battery cell and the second battery cell are suitable to supply power to same or different first electrical devices in a manner of being separated from the energy storage power supply.

In some embodiments, the first battery cell may be a first battery pack, the second battery cell may be an integrated package, the integrated package may include a mounting box and a plurality of second battery packs detachably arranged on the mounting box, and the second battery packs may be suitable to supply power to the first electrical device in a manner of being separated from the mounting box.

In an embodiment, the charging portion may include a plurality of first connection terminals, and the battery cell may be suitable to be electrically connected to each of the first connection terminals of the charging portion. In this way, when the battery cell is disposed in the accommodating portion, it can achieve cordless coupling with the energy storage power supply by connecting to each first connection terminal, which is also conducive to simplifying the structure of the energy storage power supply.

In some embodiments, the energy storage power supply may further include a direct current output interface and/or an alternating current output interface, and a second electrical device may be suitable to be electrically connected to the direct current output interface or the alternating current output interface, so as to be directly powered by the energy storage power supply.

In some embodiments, the energy storage power supply may further include an energy storage battery pack and a control module arranged in the housing, the energy storage battery pack may be configured to store electric energy, the control module may be configured to control or regulate supplying power to the outside by the energy storage battery pack; and/or, the control module may be configured to control or adjust supplying power to the energy storage battery pack by an external power supply; and the charging portion may be electrically connected to the energy storage battery pack through the control module.

In some embodiments, the housing may further include an ejection mechanism disposed in the accommodating portion, and the ejection mechanism may be configured to keep the battery cell in the accommodating portion or to separate the battery cell from the accommodating portion.

In some embodiments, the housing may include a housing body, a body of each of the accommodating portions may be arranged in the housing body, and an opening of each of the accommodating portions may be formed on a surface of the housing body.

Further, an opening of the first accommodating portion may be located on one surface of the housing body, and an opening of the second accommodating portion may be located on at least two surfaces of the housing body.

Further, an inner wall of the first accommodating portion may circumferentially limit the first battery cell, such that the first battery cell only has freedom of movement in a first axial direction; an inner wall of the second accommodating portion may laterally limit the second battery cell, such that the second battery cell has freedom of movement in at least the first axial direction and a second axial direction; and the first axial direction may be perpendicular to the second axial direction.

Further, the opening of the second accommodating portion may be located on two surfaces of the housing body, and the opening of the second accommodating portion may be L-shaped or U-shaped.

In some embodiments, the housing may include a housing body and at least two first accommodating portions, the first accommodating portions may be arranged sequentially in the housing body along a height direction of the housing body, and an opening of each of the accommodating portions may be located on a first side surface of the housing body.

Further, an inner wall of the first accommodating portion may circumferentially limit the first battery cell, such that the first battery cell only has freedom of movement in a first axial direction, and the charging portion may be disposed at a bottom of the first accommodating portion in opposition to the opening of the first accommodating portion.

Further, the housing may include a housing body, and the second accommodating portion may be movably disposed on the housing body, such that the second accommodating portion moves between a working position and an accommodating position; in the working position, an opening of the second accommodating portion may be connected to the outside such that the second battery cell is suitable to be inserted into the second accommodating portion; in the accommodating position, the second accommodating portion may be at least partially accommodated in accommodating space of the housing body.

Further, the second accommodating portion may be movably disposed on a second side surface of the housing body, the second accommodating portion may have a first limiting surface and a second limiting surface vertically extending upward from an end of the first limiting surface, the second side surface of the housing body may have an outlet, the first limiting surface may pass through the outlet and may be horizontally movably connected to the housing body, such that when in the accommodating position, the first limiting surface may be accommodated in the housing body, and when in the accommodating position, the second limiting surface may be in contact with the second side surface of the housing body.

In other embodiments, the second accommodating portion may be disposed on a top surface of the housing body, the second accommodating portion may be planar, and the charging portion disposed on the second accommodating portion may be a wireless charging portion, such that the energy storage power supply can wirelessly charge the second battery cell arranged on the second accommodating portion.

The present application also provides an energy storage device, which includes an energy storage power supply, at least one first battery cell and at least one second battery cell, the energy storage power supply is suitable to separably accommodate the first battery cell and the second battery cell, and cordlessly supply power to the first battery cell and the second battery cell; and the first battery cell and the second battery cell are suitable to supply power to same or different first electrical devices in a manner of being separated from the energy storage power supply.

In some embodiments, the first battery cell may be a first battery pack, and the second battery cell may be an integrated package, the integrated package may include a mounting box and a plurality of second battery packs detachably arranged on the mounting box, and the second battery packs may be suitable to supply power to the first electrical device in a manner of being separated from the mounting box.

Further, the first battery pack and the second battery pack may be different. The energy storage power supply is suitable to charge and store a plurality of battery packs of different first electrical devices, making the energy storage power supply applicable to a wider range. In other words, the energy storage power supply can not only provide charging and storage for at least two first battery packs of a certain first electrical device, but can also provide charging and storage for at least two second battery packs of another first electrical device. In this way, when one battery pack of each first electrical device runs out of power, it can be quickly replaced with another spare battery pack to ensure the continuous use of the first electrical device, thereby effectively solving the problem of limited use range of the first electrical device caused by the inability to sustain power supply.

In some embodiments, the mounting box may include a plurality of charging compartments for separably accommodating the second battery packs, the charging compartment may have an opening, and when the integrated package is disposed in a second accommodating portion, the opening of each charging compartment may be connected with an opening of the second accommodating portion.

Further, a plurality of the charging compartments may be arranged in sequence basically along a straight line.

Compared with the related art, the energy storage power supply of the present application can charge different battery cells adapted to different first electrical devices. After charging is completed, each battery cell can be removed from the energy storage power supply and mounted on the corresponding first electrical device, so that different first electrical devices can be used separately at positions far away from the energy storage power supply.

### BRIEF DESCRIPTION OF THE DRAWINGS

Fig. 1 is a schematic diagram of an embodiment of an energy storage device of the present application, showing the state of a battery pack being detached from an energy storage power supply, and showing a partial cross-sectional view of the energy storage power supply in the H-H direction.
Fig. 2 is a schematic diagram of an embodiment of an energy storage device of the present application, showing the state of a battery pack being accommodated by an energy storage power supply, and showing a partial enlarged view of an accommodating portion.
Fig. 3 is a schematic diagram of an application scenario of an embodiment of an energy storage device of the present application.
Fig. 4 is a schematic diagram of the exchange of two battery packs in an embodiment of an energy storage device of the present application.
Fig. 5 shows a user accessing a battery pack from an embodiment of an energy storage device of the present application.
Fig. 6 is a schematic diagram of an embodiment of an energy storage device of the present application, showing the state of an integrated package being accommodated on an energy storage power supply, and showing a partial cross-sectional view of the energy storage power supply in the M-M direction.
Fig. 7 is a schematic diagram of an embodiment of an energy storage device of the present application, showing the state of an integrated package being detached from an energy storage power supply, and showing a partial cross-sectional view of the energy storage power supply in the N-N direction.
Fig. 8 is a schematic diagram of an embodiment of an energy storage device of the present application, showing the state of an integrated package being accommodated on an energy storage power supply, and showing a partial cross-sectional view of the energy storage device.
Fig. 9 is a schematic diagram of an embodiment of an energy storage device of the present application, showing the state of an integrated package being detached from an energy storage power supply, and showing the state of an accommodating portion in a working position, showing a partial enlarged view of the accommodating portion from another angle, and showing a partial cross-sectional view of the energy storage power supply.
Fig. 10 is a schematic diagram of an embodiment of an energy storage power supply of the present application, showing the state of an accommodating portion in an accommodating position, and showing a partial cross-sectional view of the energy storage power supply.
Fig. 11 is a schematic diagram of an embodiment of an energy storage device of the present application.
Fig. 12 is a schematic diagram of an embodiment of an energy storage device of the present application.
Fig. 13 is a schematic diagram of an embodiment of an energy storage device of the present application.
Fig. 14 is a schematic diagram of an embodiment of an energy storage device of the present application.

In the drawings: 10 Energy storage power supply; 14 Housing; 141 Housing body; 1411 Top surface; 1412 Bottom surface; 1413 First side surface; 1414 Second side surface; 1415 Third side surface; 1416 Fourth side surface; 1417 Outlet; 142 Accommodating portion; 1420 Opening; 1421 First limiting surface; 1422 Second limiting surface; 142A First accommodating portion; 142B Second accommodating portion; 15 Charging portion; 151 First connection terminal; 121 direct current output interface; 122 alternating current output interface; 16 Energy storage battery pack; 20 Battery cell; 20A Battery pack; 20B Integrated package; 21 Mounting box; 211 Charging compartment; 31 First electrical device; 32 Second electrical device.

### DETAILED DESCRIPTION

Below, the present application will be further described in conjunction with specific embodiments. It should be noted that, without conflict, the embodiments or technical features described below can be arbitrarily combined to form new embodiments.

In the description of the present invention, it should be noted that for words indicating directions or positions, the terms that indicate orientation or positional relationship, such as "center", "lateral", "longitudinal", "length", "width", "thickness", "upper", "lower", "front", "back", "left", "right", "vertical", "horizontal", "top", "bottom", "inner", "outer", "clockwise", and "counterclockwise", are based on the orientation or positional relationship shown in the accompanying drawings, and are only for the convenience of describing the present application and simplifying the description, rather than indicating or implying the indicated devices or elements must have a particular orientation, or be constructed and operated in a particular orientation, so the same cannot be construed as limiting the specific protection scope of the present application.

It should be noted that the terms "first", "second", etc. in the description and claims of the present application are used to distinguish similar objects and are not necessarily used to describe a specific order or sequence.

The terms "include/comprise" and "have" and any variations thereof in the description and claims of the present application are intended to cover non-exclusive inclusion, for example, processes, methods, systems, products or devices that include a series of steps or units/cells are not necessarily limited to those steps or units/cells that are expressly listed, but may include other steps or units/cells that are not expressly listed or that are inherent to the processes, methods, products, or devices.

The term "a plurality of' in the description and claims of the present application means two or more.

An energy storage device of the present application includes an energy storage power supply 10 and at least one battery cell 20, the energy storage power supply 10 is suitable to accommodate/contain/store the battery cell 20 and charging the battery cell 20, and the battery cell 20 is suitable to supply power to a first electrical device 31 in a manner of being separated from the energy storage power supply 10. The energy storage power supply 10 can charge the battery cell 20 adapted to the first electrical device 31 and provide accommodating space for the battery cell 20, thereby solving the problem of inconvenient charging of the battery cell 20 for/of the first electrical device 31 outdoors.

The energy storage power supply 10 includes a housing 14 and a charging portion 15. The housing 14 includes a housing body 141 and at least one accommodating portion 142. The accommodating portion 142 is configured to separably accommodate the battery cell 20. The charging portion 15 is disposed in the accommodating portion 142 to supply power to the battery cell 20, that is, the energy storage power supply 10 charges the battery cell 20 through the charging portion 15. The energy storage power supply 10 is suitable to charge the battery cell 20 while accommodating the battery cell 20.

The housing body 141 includes a top surface 1411, a bottom surface 1412, and a circumferential side surface surrounding and connecting the top surface 1411 and the bottom surface 1412; the circumferential side surface include a first side surface 1413, a second side surface 1414, a third side surface 1415 and a fourth side surface 1416 connected end-to-end along the circumferential direction; the first side surface 1413 is opposite to the third side surface 1415, and the fourth side surface 1416 is opposite to the second side surface 1414. Accommodating space is defined among the top surface 1411, the bottom surface 1412 and the circumferential side surface of the housing body 141 for accommodating an energy storage battery pack, an inverter, a circuit board and other components of the energy storage power supply 10. Where, the first side surface 1413 is the main view surface of the housing body 141, and the main view surface is the side surface that is used more frequently and generally faces a user when in use.

The energy storage power supply 10 also includes a power supply body, an output unit (not shown in the figures) and a power receiving unit (not shown in the figures) which are electrically connected to the power supply body. The power receiving unit is suitable to conductively connect with an external power supply, so that the external power supply supplies power to the power supply body through the power receiving unit, and the external power supply may be a direct current power supply or an alternating current power supply. The power supply body is suitable to store electric energy provided by the external power supply and supply power to the outside in a controllable manner. The output unit is configured to output the electric energy stored in the power supply body, the output unit has a plurality of different types of interfaces, and each interface is suitable to output different types and magnitudes of electric currents. It is worth mentioning that the charging portion 15 is a type of interface of the output unit, and the charging portion 15 is suitable to output an electric current that meets the needs of the battery cell 20.

The output unit also includes at least one direct current output interface 121 and/or at least one alternating current output interface 122, the direct current output interface 121 is suitable to output direct current power, and the alternating current output interface 122 is suitable to output alternating current power. A second electrical device 32 is suitable to be electrically connected to the direct current output interface 121 or the alternating current output interface 122 so as to be directly powered by the energy storage power supply 10. The output unit may also include a wireless charging portion, the wireless charging portion can charge the battery or the electrical device by wireless charging, and the principle of wireless charging may be but is not limited to electromagnetic induction, magnetic resonance, microwave electrical transmission, etc.

Preferably, the output unit includes a plurality of direct current output interfaces 121, each direct current output interface 121 can be the same or different, and the direct current output interface 121 can be but is not limited to a USB interface, a Type-C interface, a Lightning interface, or a cigarette lighter interface.

Preferably, the output unit includes a plurality of alternating current output interfaces 122, each alternating current output interface 122 can be the same or different, and the alternating current output interface 122 can be but is not limited to a two-hole socket or a three-hole socket.

In a preferred embodiment, each direct current output interface 121 is arranged on the first side surface 1413 of the housing body 141, and each alternating current output terminal 122 is arranged on the fourth side surface 1416 (or the second side surface 1414) of the housing body 141. That is to say, each direct current output interface 121 is arranged in one plane, and each alternating current output interface 122 is arranged in another adjacent plane, which not only facilitates the classified charging of electrical devices, but also facilitates the rational distribution of the internal structure of the energy storage power supply 10.

The power supply body includes an energy storage battery pack 16 and a control module (not shown in the figures), the energy storage battery pack 16 is configured to store electrical energy, and the control module is electrically connected to the energy storage battery pack 16, the above output unit and the above power receiving unit. The control module is configured to control or regulate supplying power to the energy storage battery pack 16 by the external power supply, and the control module is also configured to control or regulate supplying power to the outside by the energy storage battery pack 16, so as to output different types or magnitudes of electric currents to the output unit.

The control module includes a BMS protection circuit, which is electrically connected to the energy storage battery pack 16 and is configured to protect the energy storage battery pack 16 and prevent the energy storage battery pack 16 from overcharging, over-discharging, over-temperature, over-current, short circuit, etc. The control module also includes an inverter, which is electrically connected to the energy storage battery pack 16 and is configured to convert alternating current power output by the energy storage battery pack 16, so as to output direct current power through the above output unit. The control module also includes a step-down circuit, which is configured to step-down high-voltage power output by the energy storage battery pack 16 and output the step-down alternating current power through the output unit, for example, supplying the step-down alternating current power to the battery cell 20 through the charging portion 15.

### [Battery cell 20]

In a first type of implementation of the battery cell 20, the battery cell 20 is implemented as a battery pack 20A, and for a more preferred example of the battery pack 20A, please refer to the prior patent CN214848865U.

The battery pack 20A can supply power to the first electrical device 31 in a manner of being separated from the energy storage power supply 10. A single battery pack 20A may supply power to the first electrical device 31, or a plurality of battery packs 20A may supply power to the first electrical device 31 at the same time. The first electrical device 31 is usually provided with a space specifically for accommodating the battery pack 20A, and the battery pack 20A is suitable to be mounted on the first electrical device 31 to directly supply power to the first electrical device 31. The battery pack 20A is different from a mobile power supply. The mobile power supply cannot directly supply power to the electrical device, and it usually needs to achieve electrical connection with the electrical device through an adapter cable, while the battery pack 20A, as a power supply adapted to the first electrical device 31, can directly supply power to the first electrical device 31 without the need for an additional adapter cable.

In some preferred embodiments, the battery pack 20A includes a charging and discharging connection portion, and the charging and discharging connection portion can work with the charging portion 15 to realize the charging of the battery pack 20A by the energy storage power supply 10; the charging and discharging connection portion can also be work with the first electrical device 31 to realize supplying power to the first electrical device 31 by the battery pack 20A. That is, the battery pack 20A can be charged and discharged through the charging and discharging connection portion, which is beneficial to simplifying the overall structure of the battery pack 20A.

Further, the charging and discharging connection portion includes a plurality of second connection terminals, and the battery pack 20A is electrically connected to each first connection terminal 151 of the charging portion 15 through the second connection terminals, so that the battery pack 20A is connected to the energy storage power supply 10 in a cordless coupling manner; the battery pack 20A is suitable to be electrically connected to the first electrical device 31 through each second connection terminal in the cordless coupling manner, that is, the battery pack 20A supplies power to the first electrical device 31 cordlessly.

Further, the charging and discharging connection portion includes three second connection terminals arranged at intervals. By setting three second connection terminals, different types of electrical signals can be transmitted. Usually, the plurality of second connection terminals need to at least include a positive connection terminal and a negative connection terminal, and the third one of the second connection terminals provides the possibility to realize the communication connection between the energy storage power supply 10 and the battery pack 20A.

Preferably, the plurality of second connection terminals include a second positive terminal and a second negative terminal, and the second positive terminal and the second negative terminal are electrically connected to a first positive terminal and a first negative terminal of the charging portion 15 respectively.

Preferably, the plurality of second connection terminals include a second communication terminal, the second communication terminal is suitable to communicatively connect to a first communication terminal on the charging portion 15, and the energy storage power supply 10 is suitable to supply power to the battery pack 20 according to communication codes transmitted by the second communication terminal.

In a second type of implementation of the battery cell 20, the battery cell 20 is an integrated package 20B, and the integrated package 20B includes a mounting box 21 and a plurality of battery packs 20A detachably arranged on the mounting box 21. For the battery pack 20A, please refer to the above implementation.

The energy storage power supply 10 is suitable to supply power to the integrated package 20B. When the integrated package 20B is powered, each battery pack 20A arranged on the mounting box 21 is powered at the same time. The plurality of battery packs 20A in the integrated package 20B may be the same or different.

Using the form of the integrated package 20B, more battery packs 20A can be charged conveniently, and when being removed from the energy storage power supply 10, a plurality of battery packs 20A can be stored by the mounting box 21, solving the storage problem of the plurality of battery packs 20A after being separated from the energy storage power supply 10.

The mounting box 21 includes a plurality of charging compartments 211 for separably accommodating the battery packs 20A, and the charging compartments 211 have openings. When the integrated package 20B is disposed in the accommodating portion 142, the opening of each charging compartment 211 is connected to the outside through an opening 1420 of the accommodating portion 142. Therefore, even if the integrated package 20B is disposed in the accommodating portion 142, the user can directly take out the battery pack 20A from the charging compartment 211, or directly put the battery pack 20A into the charging compartment 211.

Preferably, the integrated package 20B includes two or more battery packs 20A, and accordingly the mounting box 21 has two or more charging compartments 211. More preferably, the integrated package 20B includes three or more battery packs 20A, and accordingly the mounting box 21 has three or more charging compartments 211. Further preferably, the integrated package 20B includes four or more battery packs 20A, and accordingly the mounting box 21 has four or more charging compartments 211. Further preferably, a plurality of charging compartments 211 are arranged sequentially on the mounting box 21 substantially along a straight line.

In some preferred embodiments, the integrated package 20B includes a main electrical connection portion, which can work with the charging portion 15 to realize supplying power to the integrated package 20B by the energy storage power supply 10. In some embodiments, the main electrical connection portion can also work with the first electrical device 31 to realize supplying power to the first electrical device 31 by the integrated package 20B.

Preferably, the main electrical connection portion of the integrated package 20B is disposed on the mounting box 21, so that when the mounting box 21 is disposed in the accommodating portion 142, the main electrical connection portion can be electrically connected to the charging portion 15.

Further, each charging compartment 211 is provided with a branch electrical connection portion, and the branch electrical connection portion in each charging compartment 211 is electrically connected to the main electrical connection portion. The charging and discharging connection portion of the battery pack 20A is suitable to be electrically connected to each branch electrical connection portion, so that the battery pack 20A disposed in each charging compartment 210 can be electrically connected to the energy storage power supply 10 through the branch electrical connection portion and the main electrical connection portion.

In some embodiments, the integrated package 20B also includes a control circuit and an output port, the control circuit is suitable to be electrically connected to at least one battery pack 20A disposed in the charging compartment 211, and the control circuit is also electrically connected to the output port, so that the integrated package 20B can supply power to other electrical devices through the output port.

### [Housing 14]

In a first type of implementation of the housing 14, a body of the accommodating portion 142 is fixedly or detachably disposed inside the housing body 141, that is, the body of the accommodating portion 142 is disposed in the accommodating space of the housing 141, and the opening of the accommodating portion 142 is formed on the surface of the housing body 141.

In some embodiments, the opening 1420 of the accommodating portion 142 is located on one surface of the housing body 141, e.g., the first side surface 1413 or the top surface 1411.

In other embodiments, the opening 1420 of the accommodating portion 142 is located on at least two surfaces of the housing body 141. For example, the opening 1420 extends from the first side surface 1413 to the top surface 1411, or the opening 1420 extends from the first side surface 1413 to the second side surface 1412.

In some embodiments, the housing 14 includes at least two accommodating portions 142, and two accommodating portions 142 are suitable to separably accommodate identical battery cells 20, so that when one battery cell 20 runs out of power, another battery cell 20 can be chosen to continue to supply power to the first electrical device 31. It is worth mentioning that the identical battery cells 20 mentioned in the present application refer to two battery cells 20 that can interchangeably supply power to the first electrical device 31 respectively. Generally, they have the same size and the same charging and discharging voltage.

The energy storage power supply 10 can provide storage and charging for at least two battery cells 20 of the first electrical device 31, that is, can provide storage and charging for at least one spare battery cell 20, so that when one battery cell 20 of the first electrical device 31 runs out of power, it can be quickly replaced with another spare battery cell 20 to ensure the continuous use of the first electrical device 31, thus effectively solving the problem of limited use range of the first electrical device 31 caused by the inability to sustain power supply. In other words, when one battery cell 20 disposed in the first electrical device 31 runs out of power, the battery cell 20 can be removed and directly disposed on the energy storage power supply 10 for charging, and another spare battery cell 20 can be mounted on the first electrical device 31 so that the first electrical device 31 can continue to work.

In a preferred embodiment, the plurality of accommodating portions 142 are sequentially arranged in the housing body 141 along the height direction of the housing body 141, and the openings 1420 of the plurality of accommodating portions 142 are in the same direction.

In a second type of implementation of the housing 14, the accommodating portion 142 is fixedly or detachably disposed on the housing body 141, that is, the accommodating portion 142 is not accommodated by the housing body 141. For example, the accommodating portion 142 can be disposed on the top surface 1411 of the housing body 141, or can be arranged on a certain side surface of the housing body 141.

In a third type of implementation of the housing 14, the accommodating portion 142 is movably disposed on the housing body 141, so that the accommodating portion 142 moves between a working position and an accommodating position; in the working position, the opening 1420 of the accommodating portion 142 is connected to the outside so that the battery cell 20 is suitable to be inserted into the accommodating portion 142; in the accommodating position, the accommodating portion 142 is at least partially accommodated by accommodating space of the housing body 141.

Further, the accommodating portion 142 is movably disposed on the second side surface 1414 or the fourth side surface 1416 of the housing body 141. The accommodating portion 142 has a first limiting surface 1421 and a second limiting surface 1422 vertically extending upward from an end of the first limiting surface 1421, the second side surface 1414 or the fourth side surface 1416 of the housing body 141 has an outlet 1417, and the first limiting surface 1412 passes through the outlet 1417 and is horizontally movably connected to the housing body 141, so that when in the accommodating position, the first limiting surface 1421 is accommodated in the housing body 141, and when in the accommodating position, the second limiting surface 1422 is in contact with the second side surface 1414 or the fourth side surface 1416 of the housing body 141.

### [Accommodating portion 142]

In a first type of implementation of the accommodating portion 142, an inner wall of the accommodating portion 142 circumferentially limits the battery cell 20, so that the battery cell 20 only has freedom of movement in a first axial direction, and the first axial direction is the direction of extending from the opening 1420 of the accommodating portion 142 to the bottom thereof. The charging portion 15 is disposed on a bottom surface of the accommodating portion 142, so that when the battery cell 20 moves along the first axial direction to the bottom of the accommodating portion 142, it is just connected to the charging portion 15 to achieve charging.

In some embodiments, the opening 1420 of the accommodating portion 142 is perpendicular to the first axial direction.

In some embodiments, the housing 14 also includes an ejection mechanism (not shown in the figures), the ejection mechanism is disposed in the accommodating portion 142 for keeping the battery cell 20 in the accommodating portion 142 or detaching the battery cell 20 from the accommodating portion 142.

Further, the ejection mechanism is arranged at the bottom of the accommodating portion 142 opposite to the opening 1420 of the accommodating portion 142. The ejection mechanism is configured to switch between a locked state and an ejected state when being squeezed. When the ejection mechanism is in the locked state, the battery cell 20 is suitable to be kept in the accommodating portion 142, and when the ejection mechanism switches from the locked state to the ejected state, it is suitable to push the battery cell 20 out of the opening 1420 of the accommodating portion 142. In other words, the ejection mechanism is disposed in the accommodating portion 142 facing the opening 1420. After the battery cell 20 is mounted into the accommodating portion 142 from the opening 1420, it can trigger the ejection mechanism to switch between the locked state and the ejection state by pushing directly.

Variably, the ejection mechanism is movably arranged on a side wall of the accommodating portion 142. The ejection mechanism is configured to switch from an accommodating position to a release position when it is squeezed. When the ejection mechanism is in the release position, it does not protrude from the inner wall of the accommodating portion 142; when the ejection mechanism is in the accommodating position, it protrudes from the inner wall of the accommodating portion 142 and is suitable to be clamped into a slot on a side surface of the battery cell 20 to lock the battery cell 20.

In a second type of implementation of the accommodating portion 142, the inner wall of the accommodating portion 142 laterally limits the battery cell 20, so that the battery cell 20 has freedom of movement in at least the first axial direction and the second axial direction, and the first axial direction and the second axial direction are not parallel. At least one part of the opening 1420 is perpendicular to the first axial direction, and at least another part is perpendicular to the second axial direction. The battery cell 20 can enter and exit the accommodating portion 142 along the first axial direction, and can also enter and exit the accommodating portion 142 along the second axial direction. Preferably, the first axial direction and the second axial direction are perpendicular to each other.

In an embodiment, the opening 1420 of the accommodating portion 142 is L-shaped, and the battery cell 20 has freedom of movement in the first and second axial directions that are perpendicular to each other. The charging portion 15 may be disposed on the bottom surface of the accommodating portion 142 along the first axial direction, or may be disposed on the bottom surface of the accommodating portion 142 along the second axial direction. Preferably, the ejection mechanism is disposed in the accommodating portion 142, and the ejection mechanism may be referred to above and will not be described again here.

In another embodiment, the opening 1420 of the accommodating portion 142 is U-shaped, the battery cell 20 has freedom of movement in the first and second axial directions that are perpendicular to each other, and the accommodating portion 142 is penetrated in the first axial direction. The charging portion 15 is disposed on the bottom surface of the accommodating portion 142 along the second axial direction.

In another embodiment, the accommodating portion 142 is planar, that is, the opening 1420 of the accommodating portion 142 is open, and the battery cell 20 is limited only in a plane where the accommodating portion 142 is located, and can move freely in other directions. For example, the accommodating portion 142 may be disposed on the top surface of the housing body 141.

### [Charging portion 15]

In a first type of implementation of the charging portion 15, the charging portion 15 charges the battery cell 20 through electrical connection.

In some embodiments, the charging portion 15 includes a plurality of first connection terminals 151, and the battery cell 20 is suitable to be electrically connected to each first connection terminal 151 of the charging portion 15. When the battery cell 20 is disposed in the accommodating portion 142, it can achieve cordless coupling with the energy storage power supply 10 by connecting to each first connection terminal 151, which is also conducive to simplifying the structure of the energy storage power supply 10.

In an embodiment, the first connection terminal 151 is implemented as a needle-shaped or columnar connection terminal. This makes it easier for the first connection terminal to be connected to the corresponding terminal on the battery cell in a pluggable manner.

In some embodiments, each first connection terminal 151 extends from the bottom of the accommodating portion 142 to the opening 1420 independently, and the inner wall of the accommodating portion 142 circumferentially limits the battery cell 20, so that the battery cell 20 has freedom of movement only in the first axial direction. When the battery cell 20 is inserted inward from the opening 1420 of the accommodating portion 142 to the bottom, it is just connected to each first connection terminal 151 located at the bottom of the accommodating portion 142, which can not only ensures that the battery cell 20 can be electrically connected to the charging portion 15 smoothly, but also ensures that the battery cell 20 being charged is fully accommodated in the accommodating portion 142.

In some embodiments, the charging portion 15 includes three first connection terminals 151, and the three first connection terminals 151 are arranged apart from each other in the accommodating portion 142. By providing three first connection terminals 151, it can achieve the transmission of different types of electrical signals. Usually, the plurality of first connection terminals 151 should at least include a positive connection terminal and a negative connection terminal. The charging portion 15 of the present application is added with an additional terminal for electrical connection, which provides the possibility to realize the communication connection between the energy storage power supply 10 and the battery cell 20.

Further, the plurality of first connection terminals 151 include the first positive terminal and the first negative terminal, which are respectively electrically connected to the second positive terminal and the second negative terminal on the battery cell 20, thereby realizing the electrical connection between the charging portion 15 and the battery cell 20.

Further, the plurality of first connection terminals 151 include the first communication terminal, and the first communication terminal is communicatively connected with the second communication terminal on the battery cell 20, so that the energy storage power supply 10 can controllably supply power to the battery cell 20 according to information of the battery cell 20 received by the first communication terminal. In order to avoid the danger caused by the charging portion 15 supplying power to unmatched batteries, a terminal for realizing communication connection is provided among the plurality of first connection terminals 151 of the charging portion 15, and the first communication terminal can realize communication connection with the adapted battery cell 20; when the energy storage power supply 10 receives the communication codes sent by the battery cell 20 and confirms that the communication codes meet the requirements, the energy storage power supply 10 starts to charge the battery cell 20, so as to avoid potential safety hazards caused when the energy storage power supply 10 charges an unmatched battery.

In a second type of implementation of the charging portion 15, the charging portion 15 is a wireless charging portion, which charges the battery cell 20 in a wireless charging mode, that is, when the battery cell 20 is close to the charging portion 15, wireless charging can be performed. The working principle of wireless charging by the charging portion 15 may be, but is not limited to, transmitting electric energy to the battery cell 20 through electromagnetic induction, magnetic resonance, microwave electric transmission, etc.

### [Electrical device (31, 32)]

The electrical device includes a first electrical device 31 adapted to the battery cell 20 and a second electrical device 32 adapted to the energy storage power supply 10.

The second electrical device 32 may be a direct current electrical device or an alternating current electrical device, that is, the second electrical device 32 is suitable to be electrically connected to the direct current output interface 121 or the alternating current output interface 122, so as to be directly powered by the energy storage power supply 10.

The first electrical device 31 is only a direct current electrical device, which includes motorized power tool devices (such as lawn mowers, electric drill drivers, vacuum cleaners, etc.) or non-motorized electrical devices (such as work radios, work lights, etc.). It is worth mentioning that the motorized type can be implemented as motor drive.

In particular, the first electrical device 31 is configured to be cordlessly coupled to and directly powered by the battery pack 20A.

The battery pack 20A generally refers to a power tool battery or battery pack having a nominal voltage, e.g., 4V, 12V or 18V. The battery pack 20A includes a housing, a tool interface (i.e., the charging and discharging connection portion), and a door lock, and the door lock selectively locks the tool interface to a battery interface of the first electrical device 31. Specifically, the battery pack 20A supplies the power from a battery core to the first electrical device 31 through the power terminal, and conducts mutual communication and identification with the first electrical device 31 through the communication terminal. When the battery pack 20A and the first electrical device 31 shake hands with each other to identify and communicate with each other successfully, the first electrical device 31 is driven by electricity and then operates.

### [First aspect of the present application]

According to a first aspect of the present application, an energy storage power supply 10 is provided, including a housing 14; the housing 14 includes at least two accommodating portions 142, and different accommodating portions 142 are suitable to separably accommodate identical battery cells 20; a charging portion 15 is provided in the accommodating portion 142 to supply power to the battery cells 20, that is, the energy storage power supply 10 charges the battery cells 20 through the charging portion 15, and the battery cell 20 is suitable to supply power to a first electrical device 31 in a manner of being separated from the energy storage power supply 10, so that when one battery cell 20 runs out of power, another battery cell 20 can be chosen to continue to supply power to the first electrical device 31.

According to the first aspect of the present application, an energy storage device is also provided, including the energy storage power supply 10 and at least two identical battery cells 20. The energy storage power supply 10 is suitable to separably accommodate the battery cells 20 and cordlessly supply power thereto, and the battery cells 20 are suitable to alternately supply power to the first electrical device 31. Through the cooperation of at least two identical battery cells 20 and the energy storage power supply 10, the first electrical device 31 can be continuously powered in a usage scenario far away from the energy storage power supply 10.

The energy storage power supply 10 of the present application can provide charging and storage for at least two battery cells 20 of the first electrical device 31, that is, can provide charging and storage for at least one spare battery cell 20, so that when one battery cell 20 of the first electrical device 31 runs out of power, it can be quickly replaced with another spare battery cell 20 to ensure the continuous use of the first electrical device 31, thus effectively solving the problem of limited use range of the first electrical device 31 caused by the inability to sustain power supply.

There are various outdoor activities, such as outdoor barbecues, outdoor watching, sports, etc. These activities may involve electrical devices such as induction cookers, audio equipment, video equipment, lighting devices, communication devices, etc., and outdoor power supply is not convenient, so that the energy storage device is required to supply power to various electrical devices. When a traditional energy storage device supplies power to electrical devices, they generally need to be connected through wires to achieve supplying power, which will cause a lot of inconvenience outdoors. For example, when they are electrically connected through wires, electrical devices cannot be used far away from the energy storage device. In addition, when they are electrically connected through wires, the wires are scattered on the ground, and users may be in danger of being stumbled and getting an electric shock.

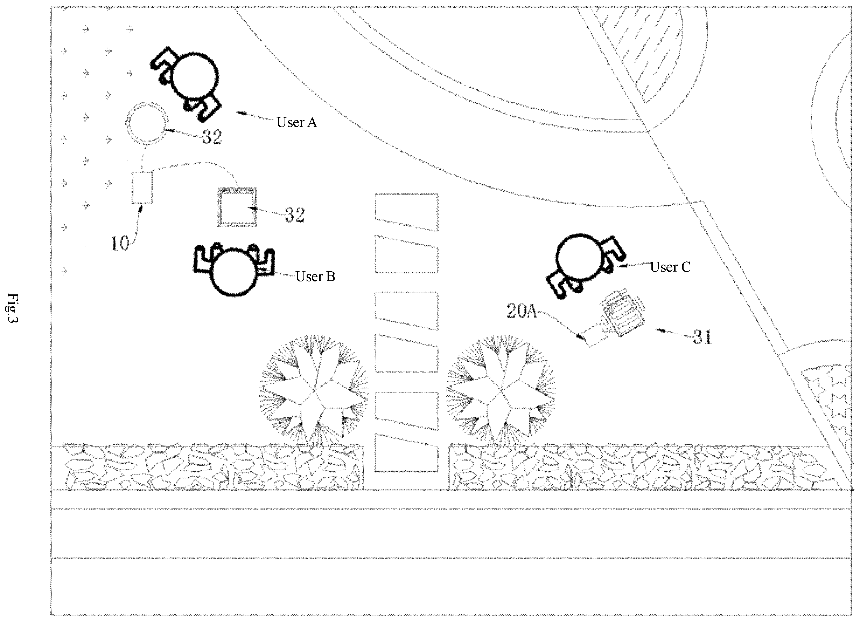

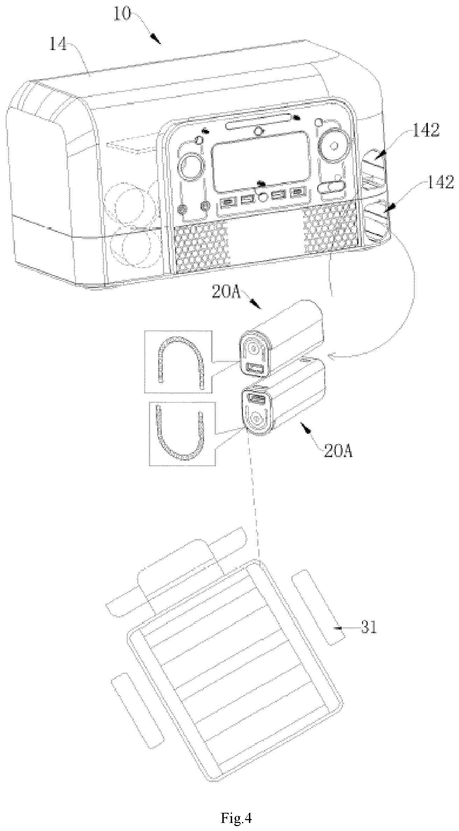

Taking the outdoor usage scenario of the energy storage power supply 10 of the present application as an example, the application of the energy storage power supply 10 is further described: as shown in the schematic diagram of the usage scenario in Fig. 3 and Fig. 4, a user A and a user B respectively use a cooking device 32, a user C uses an entertainment device 31. The cooking devices 32 are directly powered by the energy storage power supply 10, that is, the cooking devices 32 are electrically connected to the energy storage power supply 10 through wires. The entertainment device 31 is powered by one battery pack 20A, so that the activity area of the user C cannot be limited by the energy storage power supply 10 and can be set far away from the cooking devices 32. After the entertainment device 31 consumes power for a period of time, the user can remove the battery pack 20A from the entertainment device 31 and store it in the energy storage power supply 10 for charging. At the same time, the user can take out another spare battery pack 20A stored in the energy storage power supply 10 and mount it on the entertainment device 31 to ensure continuous use of the entertainment device 31.

On the one hand, the energy storage power supply 10 of the present application is capable of charging the battery cell 20, and on the other hand, the energy storage power supply 10 itself has a direct current output interface 121 and/or an alternating current output interface 122, and can directly satisfy the power usage requirements of the second electrical device 32, so when the battery pack 20A is disposed on the energy storage power supply 10, the energy storage power supply 10 is suitable to charge the battery pack 20A; when the battery pack 20A is removed from the energy storage power supply 10, the battery pack 20A is cordlessly coupled to the first electrical device 31 and supply power thereto, and the first electrical device 31 and the second electrical device 32 are suitable to operate independently of each other by using the corresponding battery pack 20A and the energy storage power supply 10. Where, the capacity of the energy storage power supply 10 is greater than the capacity of the battery pack 20A.

In particular, when the battery pack 20A is disposed on the energy storage power supply 10, the energy storage power supply 10 is suitable to charge the battery pack 20A, and its average charging current is greater than or equal to 4A. Alternatively, the battery pack 20A will at least accept charging from the energy storage power supply 10 at a charging rate of 1C.

According to the first aspect of the present application, the housing 14 includes at least two accommodating portions 142, and the different accommodating portions 142 are suitable to separably accommodate the identical battery cells 20. In this case, two identical battery cells 20, e.g., two identical battery packs 20A, are taken out and cordlessly coupled to the first electrical device 31 at the same time, and in this case, the first electrical device 31 is a dual-pack electrical device, which is provided with two mounting portions for cordless coupling with the battery packs 20A. In this case, two identical battery packs 20A are connected in a series or parallel circuit, and the double-pack electrical device may be a double-pack car washing machine (refer to CN114512761A), a double-pack lawn mower (refer to CN216218791U), etc.

### [Second aspect of the present application]

According to a second aspect of the present application, an energy storage power supply 10 is provided, including a housing 14; the housing 14 includes an accommodating portion 142, the accommodating portion 142 is suitable to separably accommodate an integrated package 20B, and a charging portion 15 is disposed in the accommodating portion 142 to supply power to the integrated package 20B; the integrated package 20B includes an mounting box 21 and a plurality of battery packs 20A detachably arranged on the mounting box 21, and the battery packs 20A are suitable to power a first electrical device 31 in a manner of being separated from the mounting box 21.

According to the second aspect of the present application, an energy storage device is also provided, including the energy storage power supply 10 and the integrated package 20B; the energy storage power supply 10 is suitable to separably accommodate the integrated package 20B, and supply power to the integrated package 20B in a manner of cordless power supply or wireless charging; the integrated package 20B includes the mounting box 21 and a plurality of battery packs 20A detachably arranged on the mounting box 21, and when the integrated package 20B is powered, each battery pack 20A arranged on the mounting box 21 is powered; the battery pack 20A is suitable to supply power to the first electrical device 31 in a manner of being separated from the mounting box 21.

The energy storage power supply 10 of the present application can provide charging and storage for a plurality of battery packs 20A of the first electrical device 31, that is, can provide charging and storage for at least one spare battery pack 20A, so that when one battery pack 20A of the first electrical device 31 runs out of power, it can be quickly replaced with another spare battery pack 20A to ensure the continuous use of the first electrical device 31, thus effectively solving the problem of limited use range of the first electrical device 31 caused by the inability to sustain power supply. In addition, in the form of integrated package 20B, a plurality of battery packs 20A can be conveniently charged together, and a plurality of battery packs 20A can be stored uniformly by the mounting box 21, solving the storage problem of the plurality of battery packs 20A after being separated from the energy storage power supply 10.

According to the second aspect of the present application, on the one hand, the energy storage power supply 10 of the present application is capable of charging the integrated package 20B, and on the other hand, the energy storage power supply 10 itself has a direct current output interface 121 and/or an alternating current output interface 122, and can directly satisfy the power usage requirements of a second electrical device 32, so when the integrated package 20B is disposed on the energy storage power supply 10, the energy storage power supply 10 is suitable to charge the battery packs 20A of the integrated package 20B; when the battery pack 20A is removed from the integrated package 20B, the battery pack 20A is cordlessly coupled to the first electrical device 31 and supply power thereto, and the first electrical device 31 and the second electrical device 32 are suitable to operate independently of each other by using the corresponding battery pack 20A and the energy storage power supply 10. Where, the capacity of the energy storage power supply 10 is greater than the sum of the capacities of the battery packs 20A in the integrated package 20B.

In particular, when the energy storage power supply 10 supplies power to the integrated package 20B in a manner of cordless power supply or wireless charging, it preferentially identifies and obtains the current power of each battery pack 20A, and preferentially charges the battery pack 20A with higher electric quantity at present to fully charge it in a short time, and then charge the battery pack 20A with lower electric quantity in sequence, so that the user can obtain a fully charged battery pack 20A in a short time. In this case, when the user runs out the power of the fully charged battery pack 20A, another battery pack will also be fully charged, which can effectively satisfy the user's need for battery exchange.

Of course, when the charging power is allowed, it is preferable that the average charging current of each battery pack 20A is greater than or equal to 4A. Alternatively, each battery pack 20A will accept charging from the energy storage power supply 10 at least at a charging rate of 1C.

According to the second aspect of the present application, each battery pack 20A in the integrated package 20B of the present application is the same, that is, the same specification, the same size, and the same voltage. In this case, a discharging interface can also be configured on the integrated package 20B, e.g., a USB interface or a Type-C interface, and a plurality of battery packs 20A are configured in parallel with each other in the mounting box 21 of the integrated package 20B. The integrated package 20B as a whole can also be used as a mobile power supply, and when any battery pack 20A is taken out of the mounting box 21 of the integrated package 20B, the overall discharging output of the integrated package 20B will not be affected.

### [Third aspect of the present application]

According to a third aspect of the present application, an energy storage power supply 10 is provided, including a housing 14; the housing 14 includes at least two accommodating potions 142, the at least two accommodating portions 142 include at least one first accommodating portion 142A and at least one second accommodating portion 142B, the first accommodating portion 142A is suitable to separably accommodate a first battery cell; the second accommodating portion 142B is suitable to separably accommodate a second battery cell; the first battery cell and the second battery cell are different. Each accommodating portion 142 is provided with a charging portion 15 for supplying power to the first battery cell or the second battery cell; and the first battery cell and the second battery cell are suitable to supply power to same or different first electrical device 31 in a manner of being separated from the energy storage power supply 10.

The structure of the first battery cell and the second battery cell may be referred to the battery cell 20 and will not be described again here.

It is worth mentioning that the first battery cell and the second battery cell are different, meaning that the first battery cell and the second battery cell are different battery cells 20, which may be different in shape, in charging/discharging form, or in assembly form, etc.

Preferably, the first battery cell is a first battery pack, and the first battery pack is suitable to supply power to the first electrical device 31 in a manner of being separated from the energy storage power supply 10. The second battery cell is an integrated package 20B, the integrated package 20B includes a mounting box 21 and a plurality of second battery packs detachably arranged on the mounting box 21, and the second battery packs 20A are suitable to supply power to the first electrical device 31 in a manner of being separated from the mounting box 21.

The structure of the first battery pack and the second battery pack can be referred to the battery pack 20A and will not be described here.

The first battery pack is different from the second battery pack, that is, the first battery pack and the second battery pack are different battery packs 20A, which may be different in shape, in charging/discharging voltage, or in capacity. Different battery packs 20A are suitable to supply power to different first electrical devices 31.

According to the third aspect of the present application, an energy storage device is also provided, including the energy storage power supply 10, at least one first battery cell and at least one second battery cell, the energy storage power supply 10 is suitable to separably accommodate the first battery cell and the second battery cell, and cordlessly supply power to the first battery cell and the second battery cell; and the first battery cell and the second battery cell are suitable to supply power to same or different first electrical device 31 in a manner of being separated from the energy storage power supply 10.

The energy storage power supply 10 of the present application can charge different battery cells adapted to different first electrical devices 31. After charging is completed, each battery cell can be removed from the energy storage power supply 10 and mounted on the corresponding first electrical device 31, so that different first electrical devices 31 can be used respectively at positions far away from the energy storage power supply 10. In addition, different battery cells of different first electrical devices 31 can be stored and powered by the energy storage power supply 10, which increases the applicable scope of the energy storage power supply 10, that is, the energy storage power supply 10 can charge more types of battery cells of the electrical devices 31.

According to the third aspect of the present application, the first battery pack is different from the second battery pack, that is, the first battery pack and the second battery pack are different battery packs 20A, and there are a plurality of first battery packs and second battery packs, all of which can be charged by the energy storage power supply 10 in a manner of cordless power supply or wireless charging, and different battery packs 20A are suitable to supply power to different first electrical devices 31. In this way, through the third aspect of the present application, on the one hand, a direct current output interface 121 and/or an alternating current output interface 122 provided in the energy storage power supply itself can be configured to meet the power usage requirements of a second electrical device 32, and on the other hand, different battery packs 20A can be suitable to supply power to different first electrical devices 31, which improves the applicable scope of the energy storage power supply 10, enriches the power usage scenarios, and meets the different power needs of users.

Specifically, the energy storage power supply 10 can satisfy power usage requirements of direct current type second electrical devices 32 through the direct current output interface 121, and/or meet the power usage requirements of alternating current type second electrical devices 32 through the alternating current output interface 122.

The first battery pack and the second battery pack are different battery packs 20A. For example, the first output voltage of the first battery pack (for example, 20V) is greater than the second output voltage of the second battery pack (for example, 4V), so that the first battery pack can meet the power usage requirements of the first electrical devices 31 with the first output voltage (for example, 20V) as the driving voltage, and the second battery pack can meet the power usage requirements of the first electrical devices 31 with the second output voltage (for example, 4V) as the driving voltage.

### [Fourth aspect of the present application]

According to a fourth aspect of the present application, an energy storage power supply 10 is provided, including a housing body 141 and an accommodating portion 142. The housing body 141 has a main view surface, and a plurality of output interfaces are arranged thereon, and a second electrical device 32 is suitable to be electrically connected to the output interfaces so as to be directly powered by the energy storage power supply 10. The accommodating portion 142 is configured to separably accommodate a battery cell 20, the battery cell 20 is suitable to supply power to a first electrical device 31 in a manner of being separated from the energy storage power supply 10, the accommodating portion 142 is disposed on the housing body 141, and an opening of the accommodating portion 141 is exposed to the main view surface of the housing body 141, so that the battery cell 20 in the accommodating portion 142 can be taken out from the direction of the main view surface of the housing body 141.

A first side surface 1413 of the housing body 141 is the main view surface. No interface for outputting an electric current is arranged on a third side surface 1415 of the housing body 141.

Since the main view surface of the energy storage power supply 10 is the side with higher frequency of use, and when a user places the energy storage power supply 10, usually the main view surface of the energy storage power supply 10 faces the user, the opening 1420 of the accommodating portion 142 is disposed on the main view surface, so that the user can easily observe the charging status of the battery cell 20, easily take the battery cell 20 from the accommodating portion 142, and also conveniently place the battery cell 20 into the accommodating portion 142.

### [Fifth aspect of the present application]

According to a fifth aspect of the present application, an energy storage power supply 10 is provided, including a housing body 141, an accommodating portion 142, at least one direct current output interface 121 and at least one alternating current output interface 122. The housing body 141 has a first side surface 1413 and a fourth side surface 1416 adjacent to each other. The accommodating portion 142 is configured to separably accommodate a battery cell 20, the battery cell 20 is suitable to supply power to a first electrical device 31 in a manner of being separated from the energy storage power supply 10, a body of the accommodating portion 142 is disposed in the housing body 141, an opening 1420 of the accommodating portion 142 is formed on a surface of the housing body 141, and the body of the accommodating portion 142 is located at the junction of the first side surface 1413 and the fourth side surface 1416. Each direct current output interface 121 is arranged on the first side surface 1413, and each alternating current output interface 122 is arranged on the fourth side surface 1416.

The first side surface 1413 of the housing body 141 is the main view surface. No interface for outputting an electric current is arranged on a third side surface 1415 of the housing body 141.

The direct current output interfaces 121 of the energy storage power supply 10 are mainly arranged on the first side surface 1413, the alternating current output interfaces 122 are mainly arranged on the fourth side surface 1416, and the accommodating portion 142 is disposed at the junction of the first side surface 1413 and the fourth side surface 1416, which is conducive to better utilization of the internal space of the housing body 141, so that various components in the housing body 141 are arranged more compactly, which helps reduce the volume of the energy storage power supply 10.

### [Embodiment 1]

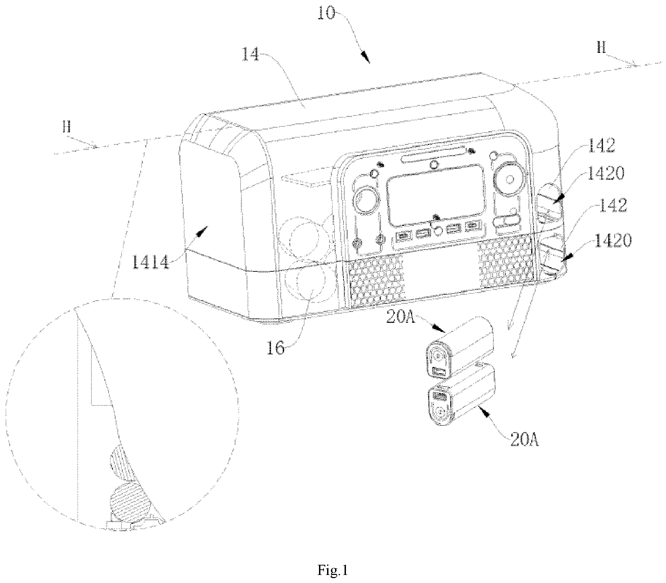

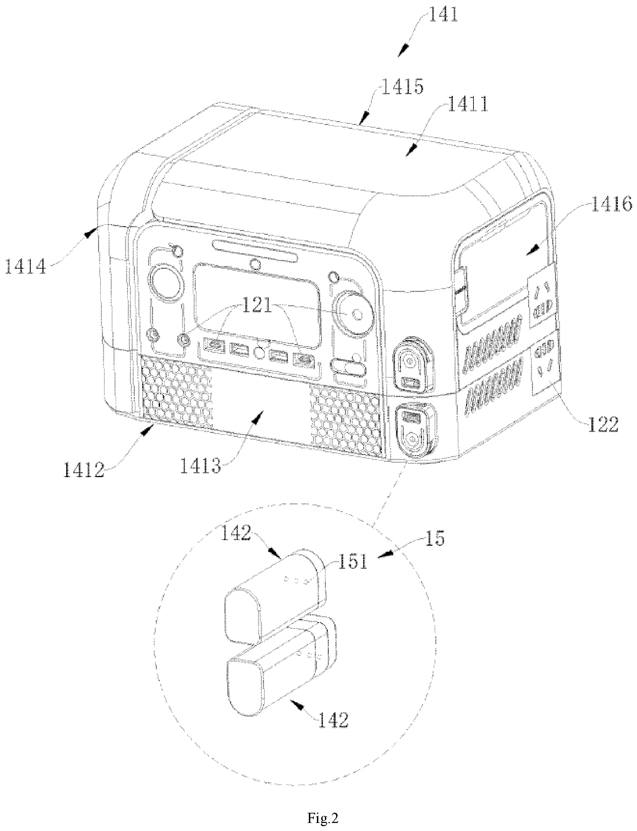

As shown in Fig. 1 and Fig. 2, an energy storage device of embodiment 1 includes an energy storage power supply 10 and two battery packs 20A. A housing 14 of the energy storage power supply 10 includes a housing body 141 and two accommodating portions 142. Bodies of the two accommodating portions 142 are arranged in the housing body 141 at intervals along the height direction, and openings 1420 of the two accommodating portions 142 are formed on a first side surface 1413 of the housing body 141. An inner wall of the accommodating portion 142 circumferentially limits the battery pack 20A, so that the battery pack 20A only has freedom of movement in a first axial direction.

A charging portion 15 is disposed at the bottom of the accommodating portion 142 in opposition to the opening 1420 of the accommodating portion 142. When the battery pack 20A is inserted from the opening 1420 to the bottom of the accommodating portion 142 along the first axial direction, a charging and discharging connection portion on the battery pack 20A is just aligned with the charging portion 15. The charging portion 15 includes three first connection terminals 151, which are arranged apart from each other, and the battery pack 20A has second connection terminals which are in a one-to-one correspondence with the first connection terminals 151 (not shown in the figures).

Each direct current output interface 121 of the energy storage power supply 10 is located on the first side surface 1413, and each alternating current output interface 122 is located on the fourth side surface 1416. The body of the accommodating portion 142 is located in the housing body 141 and is located at the junction of the first side surface 1413 and the fourth side surface 1416. The body of the accommodating portion 142 is disposed in the housing body 141 parallel to the fourth side surface 1416, that is, the body of the accommodating portion 142 extends in a direction parallel to the fourth side surface 1416.

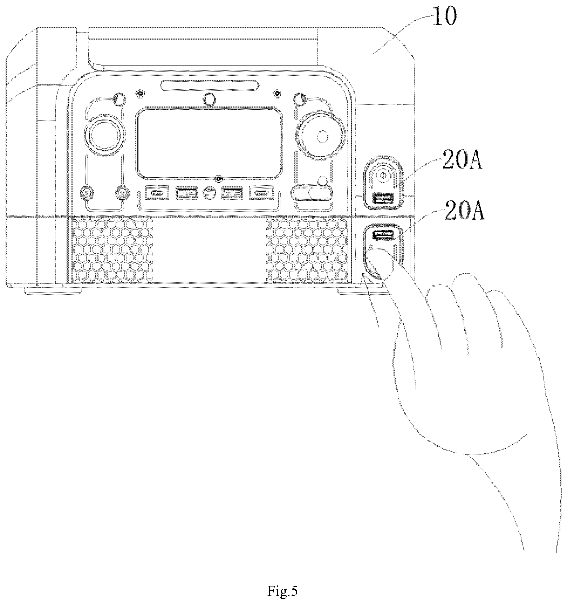

An ejection mechanism (not shown in the figures) is provided in the accommodating portion 142, the ejection mechanism is arranged at the bottom of the accommodating portion 142 opposite to the opening 1420 of the accommodating portion 142, and the ejection mechanism is configured to switch between a locked state and an ejection state when being squeezed; when the ejection mechanism is in the locked state, the battery cell 20 is suitable to be kept in the accommodating portion 142; when the ejection mechanism switches from the locked state to the ejection state, the battery cell 20 is suitable to be pushed out of the opening 1420 of the accommodating portion 142. As shown in Fig. 5, when a user presses the battery pack 20A disposed in the accommodating portion 142, the ejection mechanism can eject the battery pack 20A from the accommodating portion 142.

The first side surface 1413 of the energy storage power supply 10 is its main view surface.

### [Embodiment 2]

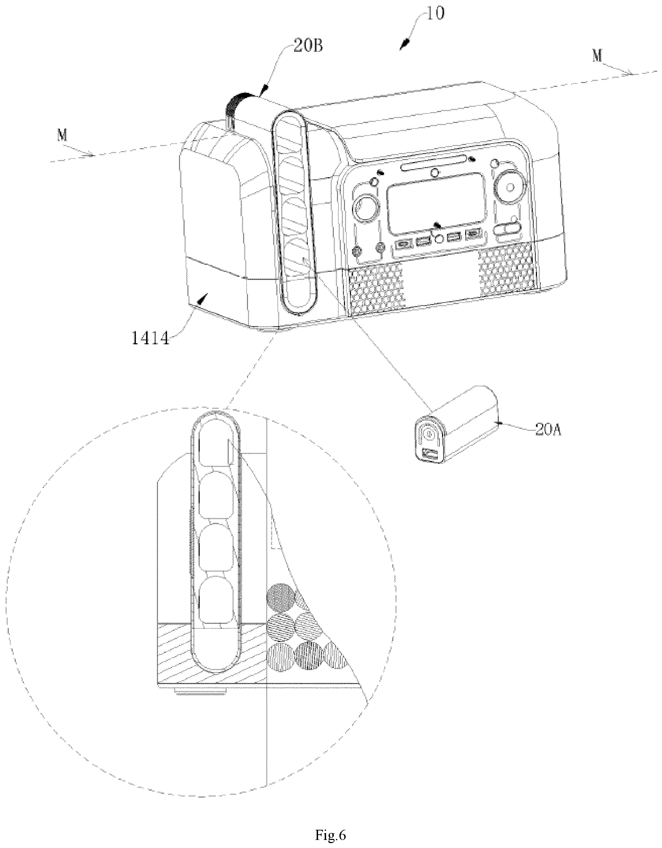

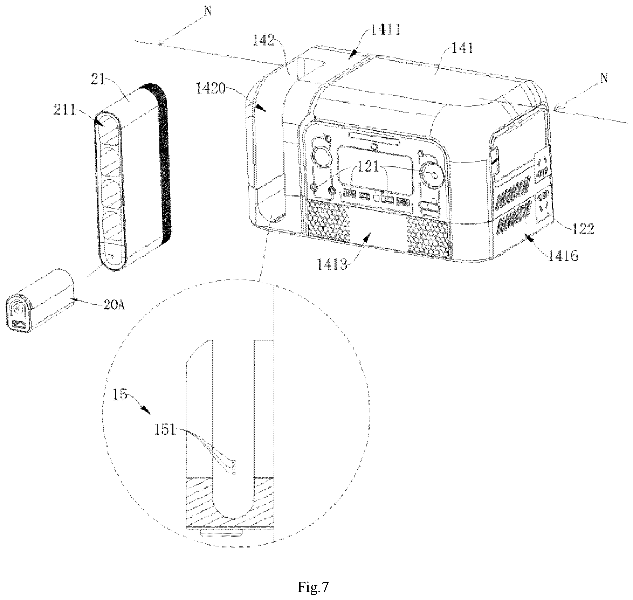

As shown in Fig. 6 and Fig. 7, an energy storage device of embodiment 2 includes an energy storage power supply 10 and an integrated package 20B. A housing of the energy storage power supply 10 includes a housing body 141 and an accommodating portion 142, a body of the accommodating portion 142 is disposed in the housing body 141, and an opening 1420 of the accommodating portion 142 extends from a first side surface 1413 to a top surface 1411 of the housing body 141. An inner wall of the accommodating portion 142 laterally limits the integrated package 20B, so that the integrated package 20B has freedom of movement in a first axial direction and a second axial direction. The opening 1420 of the accommodating portion 142 is L-shaped.

A charging portion 15 is disposed at the bottom of the accommodating portion 142 along the first axial direction and opposite to the opening 1420. When the integrated package 20B is inserted from the opening 1420 to the bottom of the accommodating portion 142 along the first axial direction, a main electrical connection portion on the integrated package 20B is just aligned with the charging portion 15. The charging portion 15 includes three first connection terminals 151, which are arranged apart from each other, and the integrated package 20B has second connection terminals which are in a one-to-one correspondence with the first connection terminals 151.

The integrated package 20B includes a mounting box 21 and a plurality of battery packs 20A detachably arranged on the mounting box 21. The mounting box 21 includes a plurality of charging compartments 211, the battery packs 20A are suitable to be separably mounted in each charging compartment 211; the charging compartment 211 has an opening, and when the integrated package 20B is disposed in the accommodating portion 142, the opening of each charging compartment 211 is opposite to the opening 1420 of the accommodating portion 142. The mounting box 21 includes four charging compartments 211. The integrated package 20B includes the main electrical connection portion, which can work with the charging portion 15 to realize charging of the integrated package 20B by the energy storage power supply 10. The main electrical connection portion of the integrated package 20B is disposed on the mounting box 21, so that when the mounting box 21 is disposed in the accommodating portion 142, the main electrical connection portion can be electrically connected to the charging portion 15. Each charging compartment 211 is provided with a branch electrical connection portion, and the branch electrical connection portion in each charging compartment 211 is electrically connected to the main electrical connection portion. A charging and discharging connection portion of the battery pack 20A is suitable to be electrically connected to each branch electrical connection portion, so that the battery pack 20A disposed in each charging compartment 210 can be electrically connected to the energy storage power supply 10 through the branch electrical connection portion and the main electrical connection portion.

Each direct current output interface 121 of the energy storage power supply 10 is located on the first side surface 1413, and each alternating current output interface 122 is located on a fourth side surface 1416. The accommodating portion 142 is disposed at the junction of the first side surface 1413 and a second side surface 1414. The body of the accommodating portion 142 is disposed in the housing body 141 parallel to the second side surface 1414.

The first side surface 1413 of the energy storage power supply 10 is its main view surface.

### [Embodiment 3]

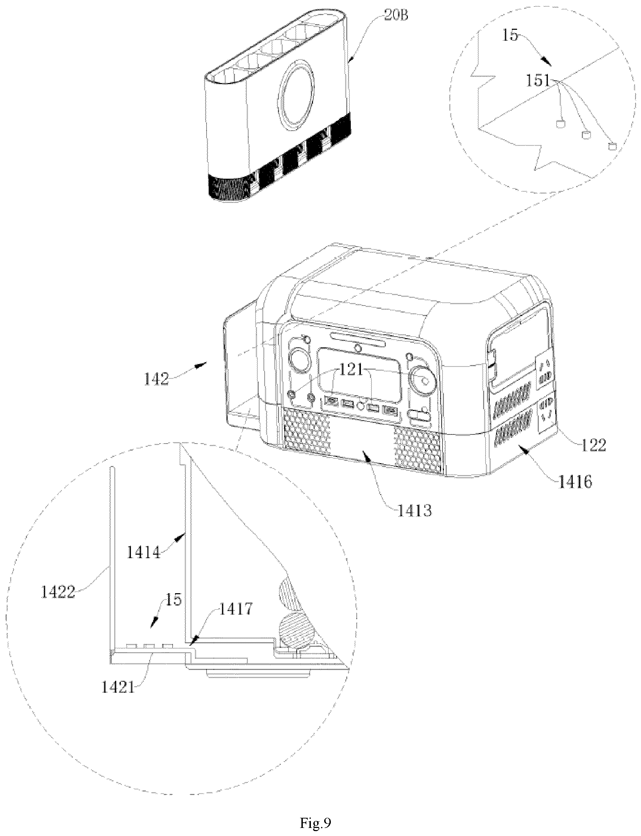

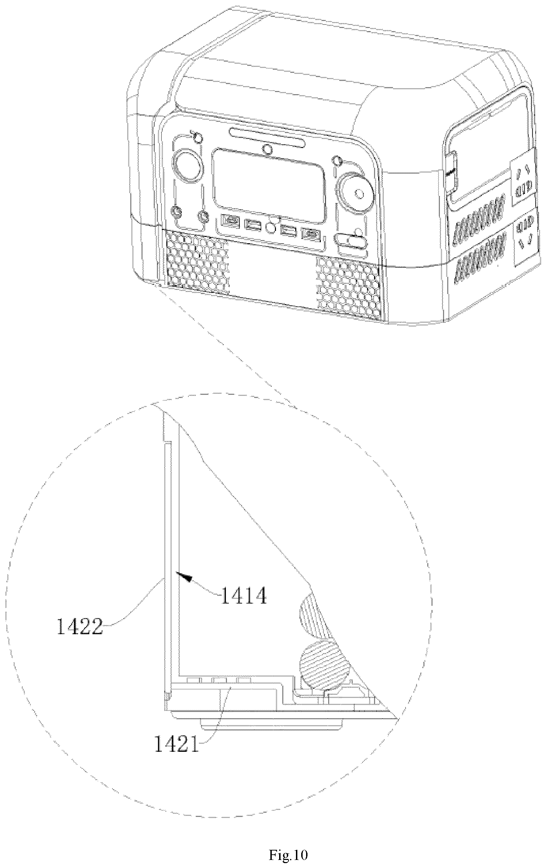

As shown in Fig. 9 and Fig. 10, an energy storage device of embodiment 3 includes an energy storage power supply 10 and an integrated package 20. A housing 14 of the energy storage power supply 10 includes a housing body 141 and an accommodating portion 142, the accommodating portion 142 is movably arranged on a side of the housing body 141, so that the accommodating portion 142 moves between a working position (as shown in Fig. 9) and an accommodating position (as shown in Fig. 10). In the working position, an opening 1420 of the accommodating portion 142 is connected to the outside, so that the integrated package 20B is suitable to be inserted into the accommodating portion 142; in the accommodating position, the accommodating portion 142 is partially accommodated by accommodating space of the housing body 141.

The accommodating portion 142 is movably disposed on a second side surface 1414 of the housing body 141. The accommodating portion 142 has a first limiting surface 1421 and a second limiting surface 1422 vertically extending upward from an end of the first limiting surface 1421, the second side surface 1414 of the housing body 141 has an outlet 1417, and the first limiting surface 1412 passes through the outlet 1417 and is horizontally movably connected to the housing body 141, so that when in the accommodating position, the first limiting surface 1421 is accommodated in the housing body 141, and when in the accommodating position, the second limiting surface 1422 is in contact with the second side surface 1414 or a fourth side surface 1416 of the housing body 141, as shown in Fig. 10.

The opening of the accommodating portion 142 is U-shaped, the integrated package 20B has freedom of movement in first and second axial directions that are perpendicular to each other, and the accommodating portion 142 is penetrated in the first axial direction. A charging portion 15 is disposed on the first limiting surface 1412. The charging portion 15 includes three first connection terminals 151, which are arranged apart from each other, and the integrated package 20B has second connection terminals which are in a one-to-one correspondence with the first connection terminals 151.

The integrated package 20B is the same as the integrated package 20B of embodiment 2, and will not be described again.

Each direct current output interface 121 of the energy storage power supply 10 is located on a first side surface 1413, and each alternating current output interface 122 is located on the fourth side surface 1416.

### [Embodiment 4]

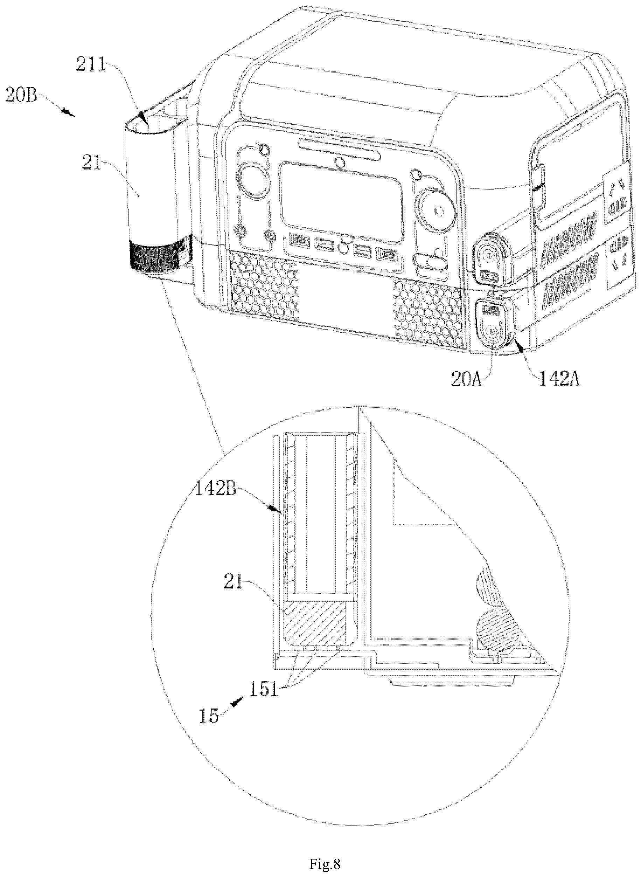

As shown in Fig. 8, an energy storage device of embodiment 4 includes an energy storage power supply 10, two identical battery packs 20A and an integrated package 20B (battery packs 20A in the integrated package 20B are not shown).

The energy storage power supply 10 includes a housing body 141, two first accommodating portions 142A and a second accommodating portion 142B, and the arrangement of the two first accommodating portions 142A is the same as the two accommodating portions 142 of embodiment 1, and will not be described again here. The implementation of the second accommodating portion 142B is the same as the accommodating portion 142 of embodiment 3, and will not be described again here.

Where, preferably, the first battery pack 20A disposed in the first accommodating portion 142A is different from the second battery pack 20A disposed in the integrated package 20B.

For example, the first output voltage of the first battery pack (for example, 20V) is greater than the second output voltage of the second battery pack (for example, 4V), so that the first battery pack can meet the power usage requirements of first electrical devices 31 with the first output voltage (for example, 20V) as the driving voltage, and the second battery pack can meet the power usage requirements of first electrical devices 31 with the second output voltage (for example, 4V) as the driving voltage.

### [Embodiment 5]

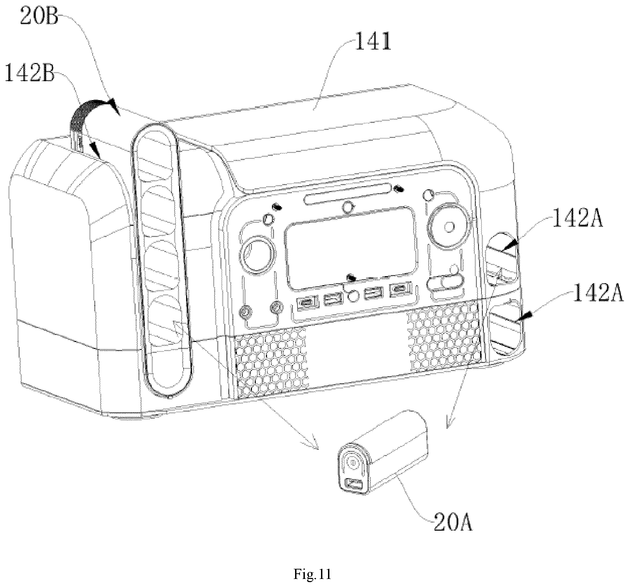

As shown in Fig. 11, an energy storage device of embodiment 5 includes an energy storage power supply 10, two identical battery packs 20A (only one battery pack 20A is shown) and an integrated package 20B (battery packs 20A in the integrated package 20B are not shown). Each battery pack 20A is the same.

The energy storage power supply 10 includes a housing body 141, two first accommodating portions 142A and a second accommodating portion 142B, and the arrangement of the two first accommodating portions 142A is the same as the two accommodating portions 142 of embodiment 1, and will not be described again here. The implementation of the second accommodating portion 142B is the same as the accommodating portion 142 of embodiment 2, and will not be described again here.

### [Embodiment 6]

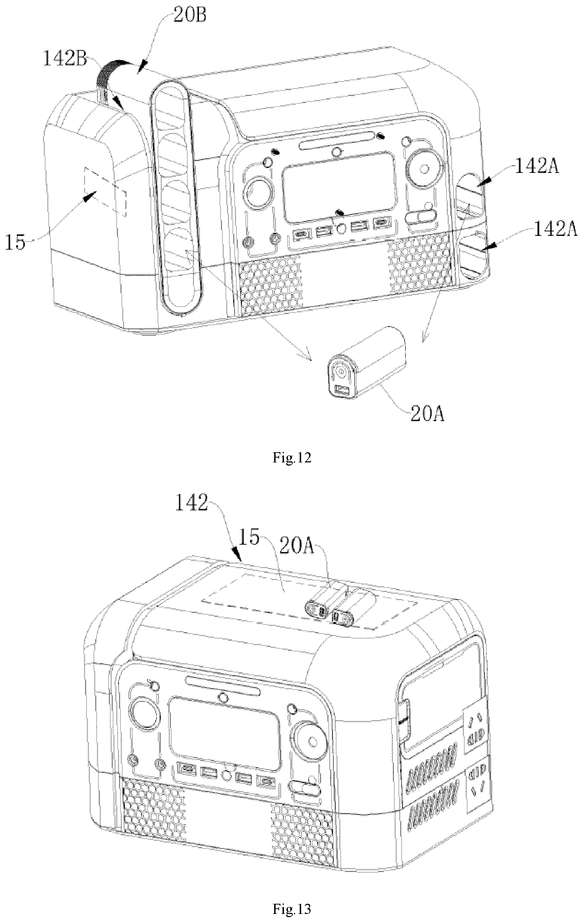

As shown in Fig. 12, the difference between an energy storage device of embodiment 6 and that of embodiment 5 is that a charging portion 15 in a second accommodating portion 142B of an energy storage power supply 10 of embodiment 6 charges an integrated package 20B in a manner of wireless charging.

### [Embodiment 7]

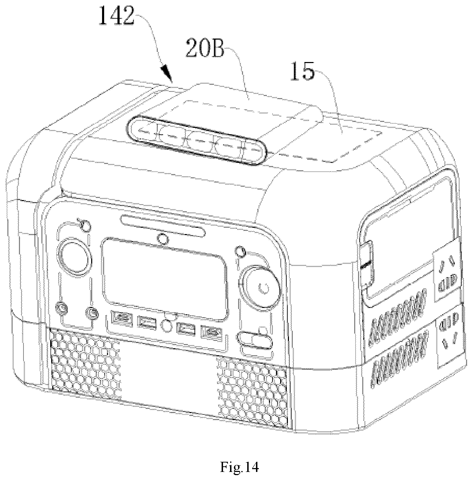

As shown in Fig. 13 and Fig. 14, an energy storage device of embodiment 7 includes an energy storage power supply 10, a plurality of battery packs 20A and an integrated package 20B.

A housing of the energy storage power supply 10 includes a housing body 141 and an accommodating portion 142, and the accommodating portion 142 is disposed on a top surface 1411 of the housing body 141. The accommodating portion 142 is planar, that is, an opening 1420 of the accommodating portion 142 is open, and the battery pack 20A or the integrated package 20B is limited only in the plane where the accommodating portion 142 is located, and can move freely in other directions.

A charging portion 15 is disposed in the accommodating portion 142, and the charging portion 15 is a wireless charging portion, which uses wireless charging to supply power to the battery pack 20A or the integrated package 20B.

It is worth mentioning that a plurality of battery packs 20A can be directly placed on the accommodating portion 142 for wireless charging.

In embodiment 7, the battery pack 20A and the integrated package 20B can be powered by the energy storage power supply 10 without circuit connection, making charging more convenient.

It should be noted that the above specific embodiments enumerate a variety of supplying power to the battery pack 20A and the integrated package 20B, and different supplying power modes can be combined with each other. For example;

### [Embodiment 8]

An energy storage device includes an energy storage power supply 10, two identical battery packs 20A and an integrated package 20B.

The energy storage power supply 10 includes a housing body 141, two first accommodating portions 142A and a second accommodating portion 142B, and the arrangement of the two first accommodating portions 142A is the same as the two accommodating portions 142 of embodiment 1, and will not be described again here. The implementation of the second accommodating portion 142B is the same as the accommodating portion 142 of embodiment 7, and will not be described again here.

It is also preferable that the first battery pack 20A arranged in the first accommodating portion 142A is different from a second battery pack 20A arranged in the integrated package 20B.

For example, the first output voltage of the first battery pack (for example, 20V) is greater than the second output voltage of the second battery pack (for example, 4V), so that the first battery pack can meet the power usage requirements of first electrical devices 31 with the first output voltage (for example, 20V) as the driving voltage, and the second battery pack can meet the power usage requirements of first electrical devices 31 with the second output voltage (for example, 4V) as the driving voltage.

The above describes the basic principles, main features and advantages of the present application. Those skilled in the art should understand that the present application is not limited by the above-mentioned embodiments. Those described in the above-mentioned embodiments and descriptions are only the principle of the present application. Various changes and improvements may be made to the present application without departing from the spirit and scope of the present application, and these changes and improvements all fall within the scope of the present application as claimed. The scope of protection claimed in the present application is defined by the appended claims and their equivalents.

## Claims

**1.** An energy storage power supply, comprising a housing; wherein the housing comprises at least two accommodating potions, the at least two accommodating portions comprise at least one first accommodating portion and at least one second accommodating portion, the first accommodating portion is suitable to separably accommodate a first battery cell; the second accommodating portion is suitable to separably accommodate a second battery cell; the first battery cell and the second battery cell are different; a charging portion is disposed in each of the accommodating portions for supplying power to the first battery cell or the second battery cell; and the first battery cell and the second battery cell are suitable to supply power to same or different first electrical devices in a manner of being separated from the energy storage power supply.

**2.** The energy storage power supply of claim 1, wherein the first battery cell is a first battery pack, the second battery cell is an integrated package, the integrated package comprises a mounting box and a plurality of second battery packs detachably arranged on the mounting box, and the second battery packs are suitable to supply power to the first electrical device in a manner of being separated from the mounting box.

**3.** The energy storage power supply of claim 1, wherein the charging portion comprises a plurality of first connection terminals, and the first battery cell or the second battery cell is suitable to be electrically connected to each of the first connection terminals of the charging portion.

**4.** The energy storage power supply of claim 1, wherein the energy storage power supply further comprises a direct current output interface and/or an alternating current output interface, and a second electrical device is suitable to be electrically connected to the direct current output interface or the alternating current output interface, so as to be directly powered by the energy storage power supply.

**5.** The energy storage power supply of claim 1, wherein the energy storage power supply further comprises a direct current output interface and/or an alternating current output interface, and a second electrical device is suitable to be electrically connected to the direct current output interface or the alternating current output interface, so as to be directly powered by the energy storage power supply.

**6.** The energy storage power supply of claim 1, wherein the energy storage power supply further comprises an energy storage battery pack and a control module arranged in the housing, the energy storage battery pack is configured to store electric energy, the control module is configured to control or regulate supplying power to the outside by the energy storage battery pack; and/or, the control module is configured to control or adjust supplying power to the energy storage battery pack by an external power supply; and the charging portion is electrically connected to the energy storage battery pack through the control module.

**7.** The energy storage power supply of claim 1, wherein the housing further comprises an ejection mechanism disposed in the accommodating portion, and the ejection mechanism is configured to keep the battery cell in the accommodating portion or to separate the battery cell from the accommodating portion.

**8.** The energy storage power supply of any one of claims 1-7, wherein the housing comprises a housing body, a body of each of the accommodating portions is arranged in the housing body, and an opening of each of the accommodating portions is formed on a surface of the housing body.

**9.** The energy storage power supply of claim 8, wherein an opening of the first accommodating portion is located on one surface of the housing body, and an opening of the second accommodating portion is located on at least two surfaces of the housing body.

**10.** The energy storage power supply of claim 9, wherein an inner wall of the first accommodating portion circumferentially limits the first battery cell, such that the first battery cell only has freedom of movement in a first axial direction; an inner wall of the second accommodating portion laterally limits the second battery cell, such that the second battery cell has freedom of movement at least in the first axial direction and a second axial direction; and the first axial direction is perpendicular to the second axial direction.

**11.** The energy storage power supply of claim 9, wherein the opening of the second accommodating portion is located on two surfaces of the housing body, and the opening of the second accommodating portion is L-shaped or U-shaped.

**13.** The energy storage power supply of any one of claims 1-7, wherein the housing comprises a housing body and at least two first accommodating portions, the first accommodating portions are arranged sequentially in the housing body along a height direction of the housing body, and an opening of each of the accommodating portions is located on a first side surface of the housing body.

**14.** The energy storage power supply of claim 13, wherein an inner wall of the first accommodating portion circumferentially limits the first battery cell, such that the first battery cell only has freedom of movement in a first axial direction, and the charging portion is disposed at a bottom of the first accommodating portion in opposition to the opening of the first accommodating portion.

**15.** The energy storage power supply of claim 13, wherein the housing comprises a housing body, and the second accommodating portion is movably disposed on the housing body, such that the second accommodating portion moves between a working position and an accommodating position; in the working position, an opening of the second accommodating portion is connected to the outside such that the second battery cell is suitable to be inserted into the second accommodating portion; in the accommodating position, the second accommodating portion is at least partially accommodated in accommodating space of the housing body.

**16.** The energy storage power supply of claim 15, wherein the second accommodating portion is movably disposed on a second side surface of the housing body, the second accommodating portion has a first limiting surface and a second limiting surface vertically extending upward from an end of the first limiting surface, the second side surface of the housing body has an outlet, the first limiting surface passes through the outlet and is horizontally movably connected to the housing body, such that when in the accommodating position, the first limiting surface is accommodated in the housing body, and when in the accommodating position, the second limiting surface is in contact with the second side surface of the housing body.

**17.** The energy storage power supply of claim 13, wherein the second accommodating portion is disposed on a top surface of the housing body, the second accommodating portion is planar, and the charging portion disposed on the second accommodating portion is a wireless charging portion, such that the energy storage power supply is capable of wirelessly charging the second battery cell arranged on the second accommodating portion.

**18.** An energy storage device, comprising an energy storage power supply, at least one first battery cell and at least one second battery cell, the energy storage power supply is suitable to separably accommodate the first battery cell and the second battery cell, and cordlessly supply power to the first battery cell and the second battery cell; and the first battery cell and the second battery cell are suitable to supply power to same or different first electrical devices in a manner of being separated from the energy storage power supply.

**19.** The energy storage device of claim 18, wherein the energy storage power supply is the energy storage power supply according to any one of claims 1-17.

**20.** The energy storage device of claim 18 or 19, wherein the first battery cell is a first battery pack, and the second battery cell is an integrated package, the integrated package comprises a mounting box and a plurality of second battery packs detachably arranged on the mounting box, and the second battery packs are suitable to supply power to the first electrical device in a manner of being separated from the mounting box.

**21.** The energy storage device of claim 20, wherein the first battery pack and the second battery pack are different.

**22.** The energy storage device of claim 20, wherein the mounting box comprises a plurality of charging compartments for separably accommodating the second battery packs, the charging compartment has an opening, and when the integrated package is disposed in a second accommodating portion of the energy storage power supply, the opening of each charging compartment is connected with an opening of the second accommodating portion.

**23.** The energy storage device of claim 22, wherein a plurality of the charging compartments are arranged in sequence basically along a straight line.
